# EUROPÄISCHE PATENTSCHRIFT

(11) **EP 2 364 884 B1**
(45) Veröffentlichungstag und Bekanntmachung des Hinweises auf die Patenterteilung: **07.11.2012**
(21) Anmeldenummer: 10175976.9
(22) Anmeldetag: 09.09.2010
(51) Int. Cl.: B60R 21/13

(54) **Überrollschutzsystem für Kraftfahrzeuge**
Rollover protection for motor vehicles
Système de protection contre les tonneaux pour des véhicules automobiles

(43) Veröffentlichungstag der Anmeldung: 14.09.2011
(73) Patentinhaber: ISE Automotive GmbH, 51702 Bergneustadt (DE)
(72) Erfinder: Naß, Michael, 51702, Bergneustadt (DE)
(74) Vertreter: Kalkoff & Partner

(56) Entgegenhaltungen:
- EP-A1- 1 870 299
- EP-A1- 1 967 419
- EP-A1- 2 147 831
- WO-A1-2006/111623
- DE-A1-102008 025 871

## Beschreibung

Die Erfindung betrifft ein Überrollschutzsystem für Kraftfahrzeuge, mit
- einem aus einer unteren Ruhelage in eine aufgestellte Überschlagsposition verstellbaren, aus mindestens zwei gelenkig miteinander verbundenen Bügelschenkeln gebildeten Überrollbügel, der
   - mit einem ersten Bügelende drehgelenkig an einer fahrzeugfest anordbaren Halterung gelagert ist und
   - mit einem zweiten Bügelende zwischen einer der Ruhelage zugeordneten Ablageposition und einer der Überschlagsposition zugeordneten Stützposition verschiebbar an der Halterung gelagert ist, und
- einer Antriebseinheit zur Verstellung des zweiten Bügelendes aus der Ablageposition in die Stützposition.

Überrollschutzsystem der eingangs genannten Art sind in vielfältigen Ausgestaltungen aus dem Stand der Technik bekannt. Sie dienen bei Fahrzeugen wie Cabriolets, welche keine starre Dachstruktur besitzen, zum Schutz der Insassen im Fall eines Überschlags des Fahrzeuges, in dem sie in Verbindung mit einem Windschutzscheibenrahmen für die Insassen einen Überlebensraum aufspannen. Starre Überrollbügel werden dabei bei neueren Fahrzeugtypen vermehrt durch sogenannte aktive Systeme ersetzt, bei denen ein Überrollbügel im Normalzustand in einer unteren Ruhelage abgelegt ist, in der dieser nicht sichtbar ist. Erst im Gefahrenfall, also bei einem drohenden Überschlag erfolgt eine Aufstellung des Überrollbügels in eine Überschlagsposition, um zu verhindern, dass die Fahrzeuginsassen durch das sich überschlagende Fahrzeug erdrückt werden.

Bekannte Überrollschutzsystem weisen dabei typischerweise für jeden Sitz einen in einem fahrzeugfesten Kassettengehäuse linear geführten Überrollbügel auf, der im Normalzustand gegen eine Vorspannkraft durch eine Haltevorrichtung in einer unteren Ruhelage gehalten wird und im Überschlagsfall in eine obere, schützende Stellung bringbar ist.

Darüber hinaus sind auch Konstruktionen von aufstellbaren Überrollbügeln bekannt, die sitzbezogen um eine Fahrzeuglängsachse aufschwenkbar sind. Bekannte Konstruktionen derartiger Faltbügel weisen jedoch den Nachteil auf, dass deren Bügelschenkel in der abgelegten Ruhelage axial hintereinander, d. h. quer zur Fahrzeugrichtung angeordnet sind und folglich einen erheblichen Bauraum beanspruchen, damit die Bügelschenkel im aufgestellten Zustand eine ausreichende Höhe aufweisen, um einen ausreichend großen Überlebensraum bereitzustellen. Ferner nachteilig ist, dass die eingesetzten Antriebssysteme zur Aufstellung des Überrollbügels mit vorgespannten Federelementen weiteren Bauraum beanspruchen und überdies eine gewisse Trägheit bei der Aufstellung der Überrollbügel aufweisen.

Die WO2006/111623 offenbart ein Überrollschutzsystem nach dem Oberbegriff des Anspruchs 1.

Der Erfindung liegt hiervon ausgehend die Aufgabe zugrunde, ein Überrollschutzsystem mit einem ausschwenkbaren Überrollbügel bereitzustellen, der in der Ruhelage einen nur geringen Platzbedarf erfordert und eine umgehende Aufstellung in die Überschlagsposition gewährleistet.

Die Erfindung löst die Aufgabe durch eine Überrollschutzvorrichtung mit den Merkmalen des Anspruchs 1. Vorteilhafte Weiterbildungen der Erfindung sind in den abhängigen Ansprüchen angegeben.

Kennzeichnend für das erfindungsgemäße Überrollschutzsystem ist, dass die Antriebseinheit einen abgegrenzten, mit einem Gasgenerator verbundenen Arbeitsraum aufweist und das zweite Bügelende in der Ablageposition derart in Wirkverbindung mit dem Arbeitsraum befindlich ist, dass eine durch eine Auslösung des Gasgenerators hervorgerufene Druckerhöhung im Arbeitsraum eine Verstellung des zweiten Bügelendes aus der Ablageposition in die Stützposition bewirkt.

Erfindungsgemäß weist der Überrollbügel einen ersten und einen zweiten Bügelschenkel auf, die gelenkig miteinander verbunden sind. Eine Aufstellung des Überrollbügels aus der unteren Ruhelage, in der die Bügelschenkel derart zueinander angeordnet sind, dass sie in der Einbaulage des Überrollschutzsystems am Fahrzeug nicht sichtbar sind, in eine aufgestellte Überschlagsposition erfolgt durch eine Verschiebung des zweiten Bügelendes des zweiten Bügelschenkels gegenüber dem drehgelenkig mit der fahrzeugfesten Halterung verbundenen ersten Bügelendes des ersten Bügelschenkels. Durch die Verlagerung des zweiten Bügelendes entlang der Halterung stellt sich der Überrollbügel soweit auf, bis dieser in die Überschlagsposition gelangt.

Die zur Verstellung des zweiten Bügelendes notwendige Energie wird durch die Antriebseinheit bereitgestellt, welche einen abgegrenzten Arbeitsraum aufweist, in dem der Gasgenerator infolge seiner Auslösung eine schlagartige Druckerhöhung bewirkt, so dass der Überdruck das zweite Bügelende aus dem Arbeitsraum herausdrängt. Der Arbeitsraum ist dabei derart abgegrenzt, d. h. gasdicht gegenüber der Umgebung ausgebildet, dass die infolge des Gasgenerators einstellende Druckerhöhung eine zuverlässige Verstellung des zweiten Bügelendes in die Stützposition bewirkt.

Die sich aus der Druckerhöhung in dem Arbeitsraum ergebende Beschleunigung des zweiten Bügelendes in Richtung auf dessen Stützposition wirkt dabei bis zu dem konstruktiv frei wählbaren Punkt, in dem das zweite Bügelende nicht mehr in Wirkverbindung mit dem Arbeitsraum steht. So kann der Arbeitsraum grundsätzlich so bemessen sein, dass über den gesamten Verfahrweg des zweiten Bügelendes eine aus der Druckerhöhung resultierende Wirkung auf das zweite Bügelende besteht. Es besteht jedoch auch die Möglichkeit, in Abhängigkeit von den konstruktiven Vorgaben sowie der sich aus der Auswahl des Gasgenerators ergebende Druckerhöhung den Arbeitsraum derart zu bemessen, dass die durch die Druckerhöhung erzielte Wirkung nur über einen Teil des Verfahrwegs, ausgehend von der Ablageposition des zweiten Bügelendes, besteht.

Die erfindungsgemäße Ausgestaltung der Antriebseinheit ermöglicht es, auf eine Vielzahl von Bauteilen, wie sie bei herkömmlichen, mit vorgespannten Federelementen ausgestatteten Antriebseinheiten verwendet werden, zu verzichten. Neben den zwingend erforderlichen Vorspannelementen sind dies ferner Verriegelungselemente sowie eine Entriegelungseinheit zur Freigabe der Federvorspannung. Der Einsatz eines Gasgenerators in einem Arbeitsraum weist darüber hinaus den Vorteil auf, dass keine Trägheitsverluste bestehen, sondern eine unverzügliche Verstellung des Überrollbügels in die Überschlagsposition erfolgt. Aufgrund des weitgehenden Verzichts auf bewegliche mechanische Bauteile in der Antriebseinheit wird überdies Fehlfunktionen in besonders zuverlässiger Weise vorgebeugt, wobei das erfindungsgemäße System darüber hinaus besonders kostengünstig herstellbar ist.

Die Wirkverbindung zwischen dem zweiten Bügelende und dem Arbeitsraum kann grundsätzlich in beliebiger Weise ausgestaltet werden, wobei auch eine Ausgestaltung denkbar ist, bei der das zweite Bügelende über einen frei wählbaren Bereich im Arbeitsraum geführt ist. Nach einer besonders vorteilhaften Ausgestaltung der Erfindung ist das zweite Bügelende jedoch gelenkig mit einem ersten Ende einer Kopplungsstange verbunden, die mit ihrem dem zweiten Bügelende gegenüberliegenden zweiten Ende verschiebbar in dem Arbeitsraum gelagert ist.

Gemäß dieser Ausgestaltung der Erfindung ist ein zumindest abschnittsweise, vorzugsweise im Bereich seines zweiten Endes an den Querschnitt des Arbeitsraums angepasster Kolben mit seinem dem zweiten Bügelende gegenüberliegenden Ende im Wesentlichen gasdicht in dem Arbeitsraum angeordnet, so dass besonders zuverlässig gewährleistet ist, dass die im Arbeitsraum infolge einer Auslösung des Gasgenerators auftretende Druckerhöhung von der Kopplungsstange vollständig auf das zweite Bügelende übertragen wird. Die gelenkige Anordnung der Kopplungsstange an dem zweiten Bügelende ermöglicht dabei besonders zuverlässig, dass der Überrollbügel nach einer Auslösung des Gasgenerators in die Überschlagsposition verstellt wird. Die Ausgestaltung der Kopplungsstange sowie des Arbeitsraumes und der sich daraus ergebende Bereich, in dem die Druckerhöhung auf die Kopplungsstange wirkt, kann dabei in Abhängigkeit von den konstruktiven Vorgaben wie Kolbenlänge, Aufstellweg, Kolbenfläche etc. sowie Auswahl des Generators frei gewählt werden.

Die Ausgestaltung des Arbeitsraums kann ebenfalls grundsätzlich in beliebiger Weise erfolgen, sofern gewährleistet ist, dass eine Erhöhung des Drucks im Arbeitsraum infolge einer Auslösung des Gasgenerators zu einer Verschiebung des in Wirkverbindung mit dem Arbeitsraum stehenden zweiten Bügelendes führt. Nach einer besonders vorteilhaften Ausgestaltung der Erfindung ist der Arbeitsraum jedoch durch einen Hohlzylinder gebildet. Der Hohlzylinder, der neben einem bevorzugt kreisförmigen Querschnitt auch einen polygonalen oder elliptischen Querschnitt aufweisen kann, weist vorzugsweise eine in Bewegungsrichtung des zweiten Bügelendes aus der Ablageposition in die Überschlagsposition gerichtete Orientierung auf, wobei eine Öffnung des Hohlzylinders vorzugsweise in Richtung auf die Stützposition ausgerichtet ist.

Der Hohlzylinder kann somit in einer einfachsten Ausgestaltung durch ein Rohr gebildet sein, in das im Falle der Verwendung einer Kopplungsstange das zweite, dem zweiten Bügelende gegenüberliegende Ende der Kopplungsstange so eingesteckt ist, dass im Inneren des Hohlzylinders ein durch dessen Innenwandung und die Kolbenfläche abgegrenzterArbeitsraum gebildet ist, in dem sich im Falle einer Aktivierung des Gasgenerators schlagartig eine Druckerhöhung einstellt. Aufgrund der Druckerhöhung erfolgt eine Verschiebung des zweiten Endes der Kopplungsstange in Richtung auf die Öffnung des Hohlzylinders, wodurch das zweite Bügelende in die Stützposition verstellt wird. Der Hohlzylinder lässt sich besonders einfach und kostengünstig herstellen und erlaubt überdies eine Führung der Kopplungsstange oder des zweiten Bügelendes.

Die grundsätzliche Funktionsweise im Falle der Verwendung einer Kopplungsstange wird bereits dann erreicht, wenn das zweite Ende der Kopplungsstange im Wesentlichen gasdicht in dem Arbeitsraum angeordnet ist. Nach einer besonders vorteilhaften Ausgestaltung der Erfindung weist das zweite Ende der Kopplungsstange jedoch ein Dichtelement auf, das derart ausgebildet ist, dass es infolge einer Druckerhöhung im Arbeitsraum an dessen Innenwandung angepresst wird. Hierdurch wird in besonders zuverlässiger Weise gewährleistet, dass der gesamte im Arbeitsraum entstehende Überdruck auf die Kopplungsstange wirkt, so dass diese besonders zuverlässig und schnell verschoben wird. Einem sich negativ auswirkenden Druckverlust infolge von Undichtigkeiten kann durch diese Ausgestaltung der Erfindung besonders wirksam vorgebeugt werden.

Die Anordnung des Gasgenerators an bzw. in dem Arbeitsraum, insbesondere des Hohlzylinders, kann in beliebiger Weise, bspw. durch Kleben erfolgen, sofern gewährleistet ist, dass infolge einer Auslösung des Gasgenerators eine Druckerhöhung im Arbeitsraum erfolgt.

Nach einer besonders vorteilhaften Ausgestaltung der Erfindung ist der Gasgenerator jedoch in den Hohlzylinder eingeclipst oder, insbesondere bei einem aus einem Kunststoff gebildeten Hohlzylinder, eingespritzt. Diese Ausgestaltung der Erfindung ermöglicht eine schnelle und somit kostengünstige Montage des Gasgenerators am Hohlzylinder, welcher hierzu bspw. eine Öffnung mit einem an den Gasgenerator angepassten Querschnitt aufweist. Darüber hinaus erlaubt die geclipste Ausgestaltung der Erfindung im Falle einer Auslösung des Überrollschutzsystems einen einfachen Austausch des Gasgenerators, so dass sich das Überrollschutzsystem kostengünstig wieder in den Ursprungszustand versetzen lässt.

Die Wahl des Gasgenerators erfolgt in Abhängigkeit der konstruktiven Vorgaben sowie der Kundenanforderungen an die geforderte Ausfahrzeit. Nach einer besonders vorteilhaften Ausgestaltung der Erfindung ist der Gasgenerator als Mikrogasgenerator ausgebildet, der es erlaubt, das Überrollschutzsystem in ergänzender Weise kostengünstig auszugestalten. Die Möglichkeit der Verwendung eines Mikrogasgenerators ergibt sich dabei jeweils aus dem erfindungsgemäßen Aufbau des Überrollschutzsystems, für das nur eine geringe Druckerhöhung ausreichend ist, um eine Aufstellung in zuverlässiger Weise zu erreichen.

Das erfindungsgemäße Überrollschutzsystem weist den Vorteil auf, das es einen nur geringen Bauraum beansprucht, wobei neben der Verwendung eines aus zwei Bügelschenkeln gebildeten Klappbügels auch die Ausgestaltung der Antriebseinheit einen wesentlichen Beitrag zum geringen Bauraum beiträgt. Das erfindungsgemäße Überrollschutzsystem lässt sich individuell für jeden Kraftfahrzeugsitz einsetzen und ist unabhängig von den Überrollschutzsystemen benachbarter Kraftfahrzeugsitze eines Kraftfahrzeugs.

Nach einer besonders vorteilhaften Ausgestaltung der Erfindung weist das Überrollschutzsystem jedoch zwei aus der unteren Ruhelage in die aufgestellte Überschlagsposition verstellbare, mindestens zwei gelenkig miteinander verbundene Bügelschenkel aufweisende Überrollbügel auf, die derart angeordnet sind, dass die Bewegungsrichtung deren jeweils zweiten Bügelenden aus der Ablageposition in die Stützposition entgegengesetzt ist.

Gemäß dieser Ausgestaltung der Erfindung ist das Überrollschutzsystem aus zwei Überrollbügeln gebildet, die benachbart zueinander, in der Einbaulage des Überrollschutzsystems quer zur Fahrzeuglängsachse angeordnet sind. Der Einsatz eines derartigen Überrollschutzsystems erlaubt es, ein Überrollschutzsystem für zwei Sitze - wie sie überwiegend im Fondbereich von Cabriolets zum Einsatz kommen - in einem Montageschritt einzubauen. Die Anordnung der Überrollbügel zueinander ist dabei derart, dass die Verstellbewegung der zweiten Bügelenden aus der Ablageposition in die Stützposition gegensätzlich erfolgt. D. h., die Überrollbügel sind mit ihren ersten Bügelenden derart gelenkig und mit ihren zweiten Bügelenden verschiebbar an der Halterung gelagert, dass die zweiten Bügelenden im Falle einer Aufstellung sich aufeinander zu oder voneinander weg bewegen. In der bevorzugten Ausführungsform, bei der sich die zweiten Bügelenden bei der Aufstellbewegung voneinander entfernen, erfolgt eine Aufstellung in der Einbaulage im Fahrzeug vorzugsweise in der Weise, dass sich die zweiten Bügelenden aus einer fahrzeugmittigen Ablageposition in Richtung einer fahrzeugaußenseitigen Stützposition bewegen. Diese Ausgestaltung ermöglicht es, die Antriebseinheiten zentral an der Halterung anzuordnen, so dass eine zentrale Ansteuerung der Antriebseinheiten möglich ist.

Nach einer weiteren Ausgestaltung der Erfindung sind im Falle der Verwendung von zwei Überrollbügeln die beiden zweiten Bügelenden in der Ablageposition in voneinander abgegrenzten Arbeitsräumen, insbesondere Hohlzylindern, mit jeweils einem Gasgenerator angeordnet. Gemäß dieser Ausgestaltung der Erfindung ist jedem zweiten Bügelende ein eigener Arbeitsraum mit jeweils einem Gasgenerator zugeordnet. Insofern erlaubt diese Ausgestaltung der Erfindung die selektive Auslösung der beiden Überrollbügel. Aufgrund der zentralen Anordnung besteht jedoch in besonders einfacher Weise die Möglichkeit, die Gasgeneratoren an eine Steuer- und Regelungseinheit anzubinden.

Nach einer weiteren Ausgestaltung der Erfindung sind die beiden zweiten Bügelenden in der Ablageposition jedoch in einem gemeinsamen Arbeitsraum, insbesondere Hohlzylinder, angeordnet, wobei ein Gasgenerator derart angeordnet ist, dass eine durch eine Auslösung des Gasgenerators hervorgerufene Druckerhöhung eine Verstellung beider Überrollbügel in die Überschlagsposition bewirkt. Gemäß dieser Ausgestaltung der Erfindung wirkt die sich infolge der Aktivierung des Gasgenerators einstellende Druckerhöhung auf beide Bügelenden und verschiebt diese in die Stützposition. Gemäß einer möglichen Ausgestaltung dieser Weiterbildung der Erfindung ist der Arbeitsraum bspw. durch einen beidseitig offenen Hohlzylinder gebildet, an dem ein Gasgenerator derart angeordnet ist, dass er im Falle einer Auslösung im zentralen Bereich des Hohlzylinders eine Druckerhöhung bewirkt, die eine Verschiebung der zweiten Bügelenden in Richtung auf die entgegengesetzt angeordneten Öffnungen bewirkt. Der Hohlzylinder muss dabei nicht geradlinig ausgebildet sein, sondern kann auch abgewinkelt oder gebogen sein, so dass sich das Überrollschutzsystem in besonders einfacher Weise an die konstruktiven Vorgaben des Kraftfahrzeugs anpassen lässt.

Die vorzugsweise Verwendung von Kopplungsstangen zur Verstellung der zweiten Bügelenden gewährleistet in besonders zuverlässiger Weise die Funktion des Überrollschutzsystems. Die Kopplungsstange selbst ist in ihrer einfachsten Ausgestaltung einstückig ausgebildet und gelenkig mit dem zweiten Bügelende verbunden. Nach einer besonders vorteilhaften Ausgestaltung der Erfindung ist die Kopplungsstange aus zwei gelenkig miteinander verbundenen Stangenelementen gebildet, so dass auch Bewegung des zweiten Bügelendes realisiert werden können, die abweichend von der Ausrichtung des Arbeitsraums, insbesondere des Hohlzylinders ausgerichtet sind.

Nach einer weiteren vorteilhaften Ausgestaltung der Erfindung ist an der Halterung eine Führung, insbesondere eine Kulisse zur Führung des zweiten Bügelendes zwischen der Ablageposition und der Überschlagsposition ausgebildet. Diese Ausgestaltung der Erfindung weist den Vorteil auf, dass das zweite Bügelende in besonders zuverlässiger Weise aus der Ablageposition in die Überschlagsposition verstellt wird. Die Verwendung einer Kulisse als Führung zeichnet sich dabei durch ihre Einfachheit sowie kostengünstige Herstellbarkeit aus. Eine Lagerung des zweiten Bügelendes an der Kulisse kann in einfacher Weise durch eine entsprechende Ausgestaltung des Bügelendes oder vorzugsweise durch sich durch das zweite Bügelende erstreckende und an die Kulisse angepasste Lagerungselemente, wie Bolzen oder dgl. realisiert werden. Die Verwendung von vorzugsweise zwei, typischerweise gegenüberliegend angeordneten Kulissen an der Halterung erhöht dabei die Stabilität sowie die Funktionssicherheit des Überrollbügels in ergänzender Weise.

Nach einer weiteren Ausgestaltung der Erfindung ist im Bereich der gelenkig miteinander verbundenen Bügelschenkel ein Deformationselement angeordnet. Dieses erlaubt es, die im Überschlagsfall wirkenden Kraftspitzen kontrolliert durch Deformation abzubauen, wodurch die Stabilität des Überrollschutzsystems in ergänzender Weise gesteigert wird. Ferner kann das Deformationselement geometrisch so angepasst werden, dass der Überlebensraum in Y-Richtung, d. h. zur Fahrzeugseite vergrößert werden kann.

Die Anordnung des Deformationselements im Bereich der gelenkig miteinander verbundenen Bügelschenkel kann grundsätzlich frei gewählt werden. So kann dieses mit dem Bügelschenkel starr oder gelenkig verbunden sein. Nach einer besonders vorteilhaften Ausgestaltung der Erfindung verbindet das Deformationselement jedoch die der Halterung abgewandten Enden der Bügelschenkel gelenkig miteinander. Gemäß dieser Ausgestaltung der Erfindung sind die Bügelschenkel nicht unmittelbar, sondern mittelbar, d. h. unter Zwischenschaltung des Deformationselements gelenkig miteinander verbunden. Hierbei kann das Deformationselement sowohl mit beiden Bügelschenkeln gelenkig als auch mit einem Bügelschenkel starr und mit dem anderen Bügelschenkel gelenkig verbunden sein.

Nach einer weiteren Ausgestaltung der Erfindung ist das Überrollschutzsystem derart ausgebildet, dass das zweite Bügelende im montierten Zustand am Fahrzeug in der Ruheposition fahrzeugmittig und in der Überschlagposition fahrzeugaußenseitig angeordnet ist. Diese Ausgestaltung der Erfindung gewährleistet eine besonders hohe Stabilität des Überrollschutzsystems im Überschlagsfall, nachdem die auftretende Belastung zunächst auf den nur drehgelenkig mit der Halterung verbundenen Bügelschenkel wirken. Darüber hinaus ermöglicht diese Ausgestaltung der Erfindung eine bauraumsparende Ausgestaltung des Überrollschutzsystems im Bereich der Fahrzeugmitte, wohingegen bauraumintensivere Komponenten fahrzeugaußenseitig angeordnet werden können.

Ausführungsbeispiele der Erfindung werden nachstehend mit Bezug auf die Zeichnungen näher erläutert. In den Zeichnungen zeigen:
- Fig. 1: eine perspektivische Ansicht einer ersten Ausführungsform eines Überrollschutzsystems;
- Fig. 2: eine Ansicht eines Schnitts des Überrollschutzsystems von Fig. 1 in einer Überschlagsposition;
- Fig. 3: eine Ansicht eines Schnitts des Überrollschutzsystems von Fig. 1 in einer unteren Ruhelage;
- Fig. 4: eine vergrößerte Ansicht eines Schnitts des Überrollschutzsystems von Fig. 1 in einer Ruhelage und
- Fig. 5: eine perspektivische Ansicht einer zweiten Ausführungsform eines Überrollschutzsystems ohne Darstellung der Halterung.

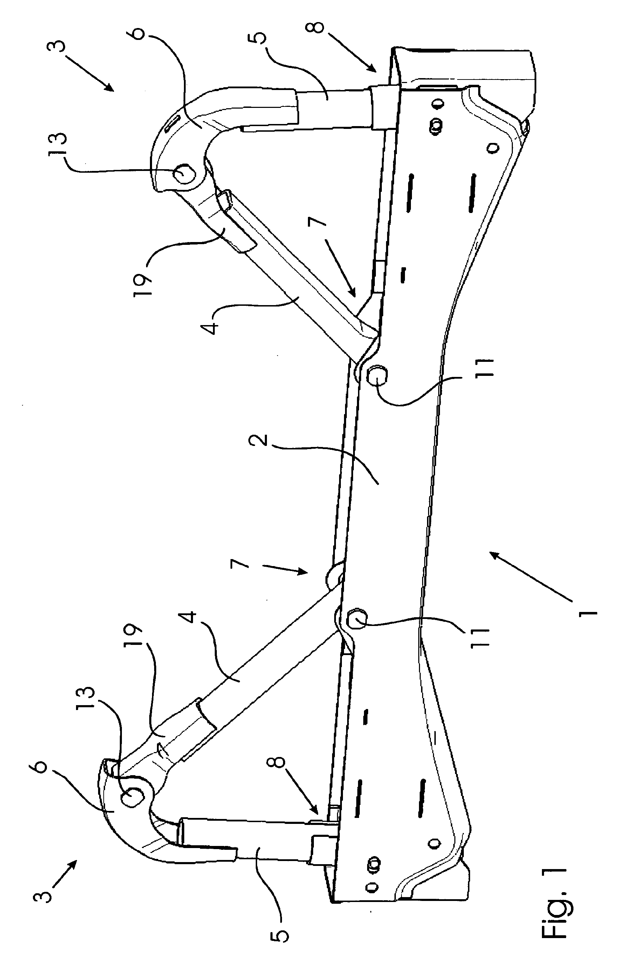

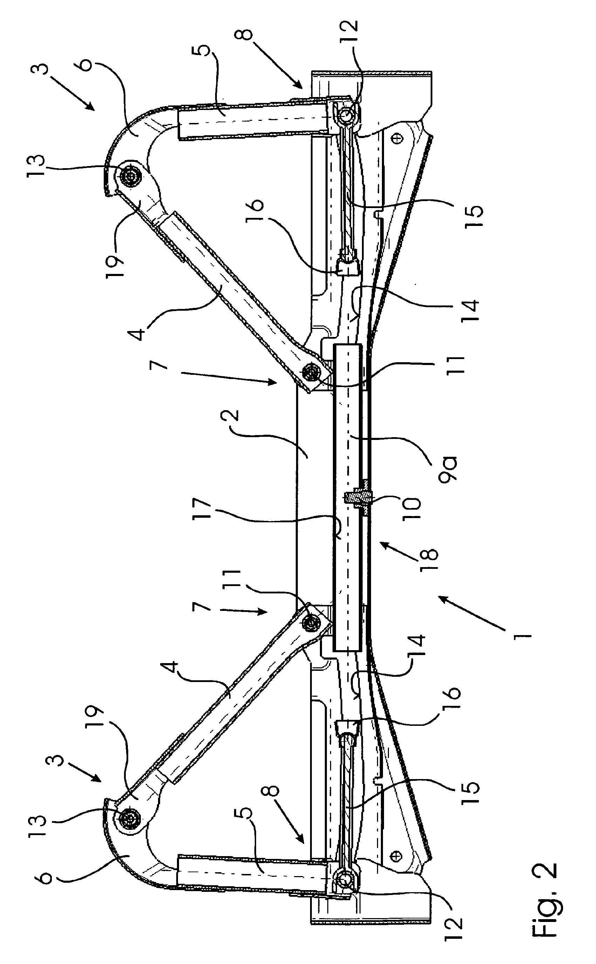

In den Figuren 1 und 2 ist eine erste Ausführungsform eines Überrollschutzsystems 1 mit zwei Überrollbügeln 3 in einer Überschlagsposition dargestellt. Die Überrollbügel 3 weisen jeweils einen ersten Bügelschenkel 4 und einen zweiten Bügelschenkel 5 auf, die gelenkig miteinander verbunden sind. Hierzu ist an dem ersten Bügelschenkel 4 ein Anschlusselement 19 angeordnet, welches über einen Gelenkbolzen 13 mit einem an dem zweiten Bügelschenkel 5 angeordneten Deformationselement 6 gelenkig verbunden ist.

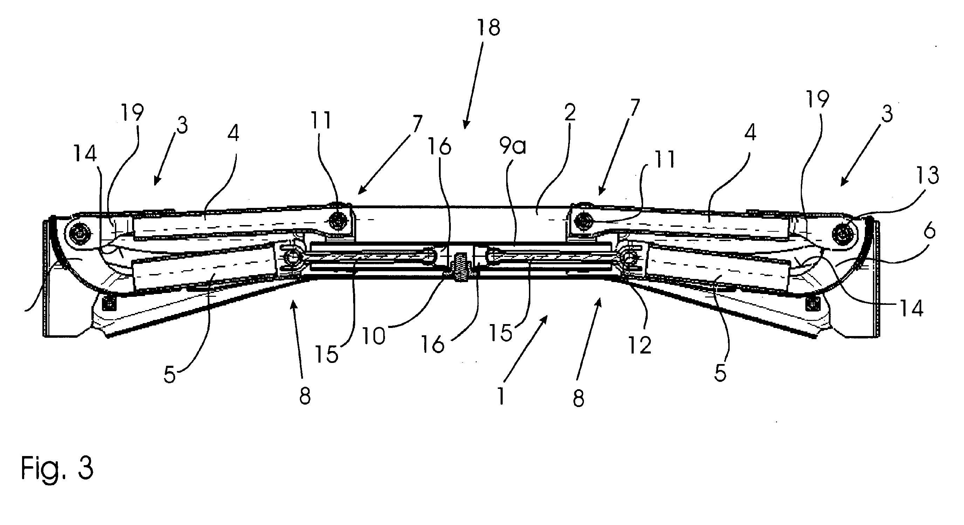

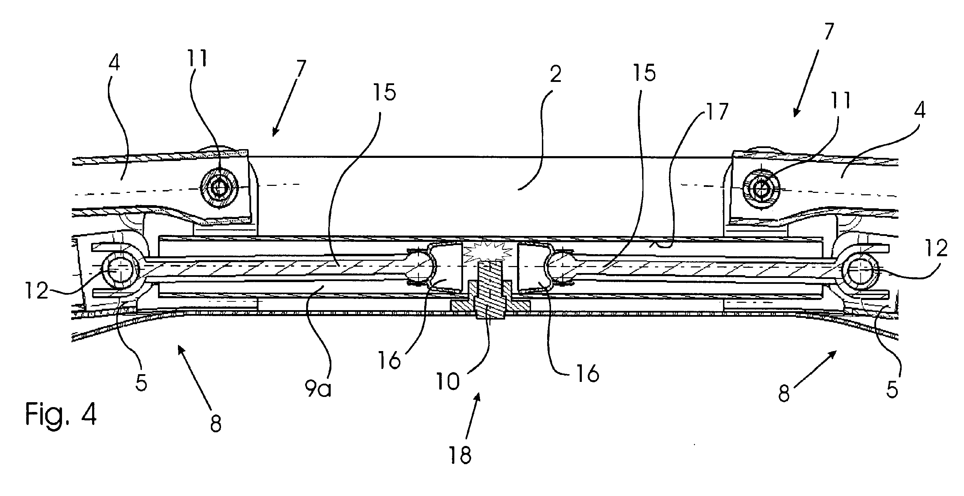

Das dem Gelenkbolzen 13 gegenüberliegende Ende des ersten Bügelschenkel 4 ist mit einem ersten Bügelende 7 über einen Gelenkbolzen 11 drehgelenkig mit einer Halterung 2 des Überrollschutzsystems 1 verbunden. Das dem ersten Bügelende 7 gegenüberliegende zweite Bügelende 8 des Überrollbügels 3 ist seinerseits verschiebbar an der Halterung 2 gelagert. Hierzu weist das zweite Bügelende 8 einen Gelenkbolzen 12 auf, der sich durch eine Kulisse 14 an der Halterung 2 erstreckt und so die Bewegung des zweiten Bügelendes 8 aus der in den Fig. 3 und 4 dargestellten Ruhelage des Überrollbügels 3 in dessen in den Fig. 1 und 2 dargestellte Überschlagsposition festlegt.

Zur Verstellung der Überrollbügel 3 aus der Ruhelage in die Überschlagsposition bzw. des zweiten Bügelendes 8 an dessen Ablageposition in seine Stützposition weist das Überrollschutzsystem 1 eine Antriebseinheit 18 auf. Diese weist einen zentral an der Halterung 2 angeordneten Hohlzylinder 9a auf, welcher in seinem mittigen Bereich wiederum einen Mikrogasgenerator 10 aufweist, der sich in das Innere des Hohlzylinders 9a erstreckt. Eine Auslösung des Mirkogasgenerators 10 führt zu einer schlagartigen Druckerhöhung im Inneren des Hohlzylinders 9a, die zur Verstellung des Überrollbügels 3 aus der Ruhelage in die Überschlagsposition führt.

Hierzu ist eine Kopplungsstange 15 einenends gelenkig über einen Gelenkbolzen 12 mit dem zweiten Bügelende 8 des zweiten Bügelschenkels 5 verbunden und befindet sich mit seinem dem zweiten Bügelende 8 gegenüberliegenden zweiten Ende im Inneren des Hohlzylinders 9a. Ein an einer Innenwandung 17 des Hohlzylinders 9a anliegendes Dichtungselement 16 gewährleistet, dass es infolge einer Druckerhöhung zu einer Verlagerung der Kopplungsstange 15 in Richtung auf die Öffnungen des Hohlzylinders 9a kommt, wodurch das zweite Bügelende 5 in der Einbaulage des Überrollschutzsystems 1 entlang der Kulisse 14 in Richtung der Fahrzeugaußenseite verstellt wird.

Die Verwendung des Mikrogasgenerators 10, wie in den Fig. 1-4 dargestellt, ermöglicht dabei die Verstellung beider benachbart zueinander angeordneten Überrollkörper 3, so dass sich eine gleichzeitige Aufstellung der Überrollbügel 3 im Falle einer Aktivierung des Gasgenerators 10 ergibt.

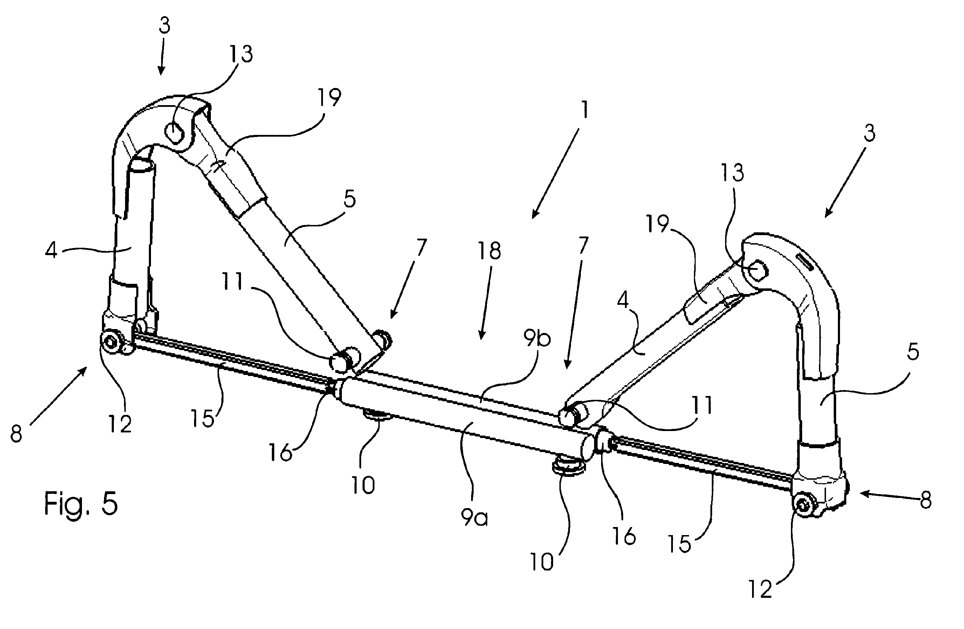

Das in Fig. 5 dargestellte zweite Ausführungsbeispiel des Überrollschutzsystems 1 unterscheidet sich von dem in den Fig. 1-4 dargestellten Überrollschutzsystem 1 dadurch, dass die den jeweiligen Überrollbügeln 3 zugeordneten Kopplungsstangen 15 jeweils in einem separaten Hohlzylinder 9a, 9b geführt sind, welcher jeweils einen Gasgenerator 10 aufweist. Die Hohlzylinder 9a, 9b sind in diesem Fall im Bereich der Gasgeneratoren 10 verschlossen und weisen nur eine Öffnung zur Aufnahme der den zweiten Bügelenden 8 gegenüberliegenden Enden der Kopplungsstange 16 auf. Im Übrigen stimmt der Aufbau mit dem in Fig. 1-4 dargestellten Aufbau des Überrollschutzsystems 1 überein.

## Patentansprüche

1. Überrollschutzsystem 1 für Kraftfahrzeuge, mit
- einem aus einer unteren Ruhelage in eine aufgestellte Überschlagsposition verstellbaren, aus mindestens zwei gelenkig miteinander verbundenen Bügelschenkeln gebildeten Uberrollbügel 3 der
- mit einem ersten Bügelende 7 drehgelenkig an einer fahrzeugfest anordbaren Halterung 2 gelagert ist und
- mit einem zweiten Bügelende 8 zwischen einer der Ruhelage zugeordneten Ablageposition und einer der Überschlagsposition zugeordneten Stützposition verschiebbar an der Halterung 2 gelagert ist, und
- einer Antriebseinheit 18 zur Verstellung des zweiten Bügelendes 8 aus der Ablageposition in die Stützposition,
**dadurch gekennzeichnet, dass**
die Antriebseinheit (18) einen abgegrenzten, mit einem Gasgenerator (10) verbundenen Arbeitsraum (9a, 9b) aufweist und das zweite Bügelende (5) in der Ablageposition derart in Wirkverbindung mit dem Arbeitsraum (9a, 9b) befindlich ist, dass eine durch eine Auslösung des Gasgenerators (10) hervorgerufene Druckerhöhung im Arbeitsraum (9a, 9b) eine Verstellung des zweiten Bügel-endes (5) aus der Ablageposition in die Stützposition bewirkt.

2. Überrollschutzsystem nach Anspruch 1, **dadurch gekennzeichnet, dass** das zweite Bügelende (5) gelenkig mit einem ersten Ende einer Kopplungsstange (15) verbunden ist, die mit ihrem dem zweiten Bügelende (5) gegenüberliegenden zweiten Ende verschiebbar in dem Arbeitsraum (9a, 9b) gelagert ist.

3. Überrollschutzsystem nach Anspruch 1 oder 2, **dadurch gekennzeichnet, dass** der Arbeitsraum durch einen Hohlzylinder (9a, 9b) gebildet ist.

4. Überrollschutzsystem nach einem der vorhergehenden Ansprüche, **dadurch gekennzeichnet, dass** das zweite Ende der Kopplungsstange (15) ein Dichtelement (16) aufweist, das derart ausgebildet ist, dass es in Folge einer Druckerhöhung in dem Arbeitsraum (9a, 9b) an dessen Innenwandung (17) angepresst wird.

5. Überrollschutzsystem nach einem der vorhergehenden Ansprüche, **dadurch gekennzeichnet, dass** der Gasgenerator (10) in den Hohlzylinder (9a, 9b) eingeclipst oder eingespritzt ist.

6. Überrollschutzsystem nach einem der vorhergehenden Ansprüche, **dadurch gekennzeichnet, dass** der Gasgenerator als Mikrogasgenerator (10) ausgebildet ist.

7. Überrollschutzsystem nach einem der vorhergehenden Ansprüche, **gekennzeichnet durch** zwei aus der unteren Ruhelage in die aufgestellte Überschlagsposition verstellbare, mindestens zwei gelenkig miteinander verbundenen Bügelschenkel (4,5) aufweisende Überrollbügel (3), die derart angeordnet sind, dass die Bewegungsrichtung deren jeweils zweiten Bügelenden (8) aus der Ablageposition in die Stützposition entgegengesetzt ist.

8. Überrollschutzsystem nach einem der vorhergehenden Ansprüche, **dadurch gekennzeichnet, dass** die beiden zweiten Bügelenden (8) in der Ablageposition in voneinander abgegrenzten Arbeitsräumen (9a, 9b), insbesondere Hohlzylindern, mit jeweils einem Gasgenerator (10) angeordnet sind.

9. Überrollschutzsystem nach einem der vorhergehenden Ansprüche, **dadurch gekennzeichnet, dass** die beiden zweiten Bügelenden (8) in der Ablageposition in einem gemeinsamen Arbeitsraum (9a, 9b), insbesondere Hohlzylinder, angeordnet sind, wobei ein Gasgenerator (10) derart angeordnet ist, dass eine durch eine Auslösung des Gasgenerators (10) hervorgerufene Druckerhöhung eine Verstellung beider Bügelenden (8) in die Überschlagsposition bewirkt.

10. Überrollschutzsystem nach einem der vorhergehenden Ansprüche, **dadurch gekennzeichnet, dass** die Kopplungsstange (15) aus zwei gelenkig miteinander verbundenen Stangenelementen gebildet ist.

11. Überrollschutzsystem nach einem der vorhergehenden Ansprüche, **dadurch gekennzeichnet, dass** an der Halterung (2) eine Führung (14), insbesondere eine Kulisse, zur Führung des zweiten Bügelendes (5) zwischen der Ablageposition und der Überschlagsposidon ausgebildet ist.

12. Überrollschutzsystem nach einem der vorhergehenden Ansprüche, **dadurch gekennzeichnet, dass** im Bereich der gelenkig miteinander verbundenen Bügelschenkel (4, 5) ein Deformationselement (6) angeordnet ist.

13. Überrollschutzsystem nach einem der vorhergehenden Ansprüche, **dadurch gekennzeichnet, dass** das Deformationselement (6) die Bügelschenkel (4, 5) gelenkig miteinander verbindet.

14. Überrollschutzsystem nach einem der vorhergehenden Ansprüche, **dadurch gekennzeichnet, dass** sich das zweite Bügelende (5) zur Aufstellung des Überrollbügels (3) in die Überschlagsposition aus einer dem ersten Bügelende (4) nahen Ablageposition in eine dem ersten Bügelende (4) ferne Stützposition verschiebt

## Claims

1. A rollover protection system (1) for motor vehicles, with
- a rollover bar (3), formed by at least two bar legs connected together in an articulated manner, movable from a lower rest position into a deployed rollover position that
- is pivotably mounted with a first bar end (7) at a retainer (2) that can be disposed fixed in the vehicle, and
- is movably mounted with a second bar end (8) at the retainer (2) between a storage position assigned to the rest position and a support position assigned to the rollover position, and
- a drive unit (18) for moving the second bar end (8) out of the storage position into the support position,
**characterized in that**
the drive unit (18) has a delimited working space (9a, 9b) connected to a gas generator (10), and the second bar end (5) is located in the storage position such that it is in effective connection with the working space (9a, 9b), that a pressure increase in the working space (9a, 9b) caused by a triggering of the gas generator (10), causes a movement of the second bar end (5) out of the storage position into the support position.

2. The rollover protection system according to claim 1, **characterised in that** the second bar end (5) is connected in an articulated manner to a first end of a connecting rod (15) that is mounted movable with the second end thereof located opposite the second bar end (5) in the working space (9a, 9b).

3. The rollover protection system according to claim 1 or 2, **characterized in that** the working spacing is formed by a hollow cylinder (9a, 9b).

4. The rollover protection system according to one of the preceding claims, **characterized in that** the second end of the connecting rod (15) has a sealing element (16) that is formed such that it is pressed against the inner wall (17) of the working space (9a, 9b) as a consequence of a pressure increase therein.

5. The rollover protection system according to one of the preceding claims, **characterized in that** the gas generator (10) is clipped into or injected into the hollow cylinder (9a, 9b).

6. The rollover protection system according to one of the preceding claims, **characterized in that** the gas generator is designed as a micro gas generator (10).

7. The rollover protection system according to one of the preceding claims, **characterized by** two rollover bars (3) having at least two bar legs (4, 5) connected together in an articulated manner, movable from the lower rest position into the deployed rollover position, which are disposed such that the direction of movement of the respective second bar ends (8) thereof out of the storage position into the support position is opposing.

8. The rollover protection system according to one of the preceding claims, **characterized in that** the two second bar ends (8) are disposed in the storage position in working spaces (9a, 9b) delimited from each other, particularly hollow cylinders, each having a gas generator (10).

9. The rollover protection system according to one of the preceding claims, **characterized in that** the two second bar ends (8) in the storage position are disposed in a common working space (9a, 9b), particularly a hollow cylinder, wherein a gas generator (10) is disposed therein, such that a pressure increase caused by a triggering of the gas generator (10) causes a movement of both bar ends (8) into the rollover position.

10. The rollover protection system according to one of the preceding claims, **characterized in that** the connecting rod (15) is formed from two rod elements connected together in an articulated manner.

11. The rollover protection system according to one of the preceding claims, **characterized in that** a guide (14), particularly a gate, is formed at the retainer (2) for guiding the second bar end (5) between the storage position and the rollover position.

12. The rollover protection system according to one of the preceding claims, **characterized in that** a deformation element (6) is disposed in the region of the bar legs (4, 5) connected together in an articulated manner.

13. The rollover protection system according to one of the preceding claims, **characterized in that** the deformation element (6) connects the bar legs (4, 5) together in an articulated manner.

14. The rollover protection system according to one of the preceding claims, **characterized in that** the second bar end (5), for placement of the rollover bar (3) into the rollover position, slides out of a storage position near the first bar end (4) into the support position away from the first bar end (4).

## Revendications

1. Système de protection contre les tonneaux (1) pour des véhicules automobiles, comprenant
- un arceau de sécurité (3), réglable à partir d'une position de repos inférieure dans une position de retournement montée, formé d'au moins deux montants d'arceau reliés entre eux de manière articulée, l'arceau de sécurité
- étant monté avec une première extrémité d'arceau (7) par articulation tournante sur un support (2) pouvant être agencé de manière solidaire au véhicule et
- étant monté de manière coulissante sur le support (2) avec une seconde extrémité d'arceau (8) entre une position de rangement associée à la position de repos et une position d'appui associée à la position de retournement, et
- une unité d'entraînement (18) pour le réglage de la seconde extrémité d'arceau (8) de la position de rangement à la position d'appui,
**caractérisé en ce que**
l'unité d'entraînement (18) comporte un espace de travail (9a, 9b) délimité relié à un générateur à gaz (10), et la seconde extrémité d'arceau (5) se trouve dans la position de rangement en liaison active avec l'espace de travail (9a, 9b), de telle sorte qu'une augmentation de pression dans l'espace de travail (9a, 9b) provoquée par un déclenchement du générateur à gaz (10) entraîne un déplacement de la seconde extrémité d'arceau (5) de la position de rangement à la position d'appui.

2. Système de protection contre les tonneaux selon la revendication 1, **caractérisé en ce que** la seconde extrémité d'arceau (5) est reliée de manière articulée à une première extrémité d'une tige d'accouplement (15) qui est montée coulissante dans l'espace de travail (9a, 9b) avec sa seconde extrémité opposée à la seconde extrémité d'arceau (5).

3. Système de protection contre les tonneaux selon la revendication 1 ou 2, **caractérisé en ce que** l'espace de travail est formé par un cylindre creux (9a, 9b).

4. Système de protection contre les tonneaux selon une des revendications précédentes, **caractérisé en ce que** la seconde extrémité de la tige d'accouplement (15) présente un élément d'étanchéité (16) qui est conçu de telle sorte qu'il est pressé à la suite d'une augmentation de pression dans l'espace de travail (9a, 9b) contre la paroi interne de celui-ci.

5. Système de protection contre les tonneaux selon une des revendications précédentes, **caractérisé en ce que** le générateur à gaz (10) est clipsé ou injecté dans le cylindre creux (9a, 9b).

6. Système de protection contre les tonneaux selon une des revendications précédentes, **caractérisé en ce que** le générateur à gaz est réalisé sous forme de microgénérateur à gaz (10).

7. Système de protection contre les tonneaux selon une des revendications précédentes, **caractérisé par** deux arceaux de sécurité (3) réglables dans la position de retournement montée à partir de la position de repos inférieure, comprenant au moins deux montants d'arceau (4, 5) reliés entre eux de manière articulée, lesquels arceaux de sécurité sont agencés de telle sorte que le sens de mouvement de leurs secondes extrémités d'arceau (8) respectives est inversé de la position de rangement à la position d'appui.

8. Système de protection contre les tonneaux selon une des revendications précédentes, **caractérisé en ce que** les deux secondes extrémités d'arceau (8) sont agencées dans la position de rangement dans des espaces de travail (9a, 9b) délimités les uns des autres, en particulier des cylindres creux, dotés respectivement d'un générateur à gaz (10).

9. Système de protection contre les tonneaux selon une des revendications précédentes, **caractérisé en ce que** les deux secondes extrémités d'arceau (8) sont agencées dans la position de rangement dans un espace de travail (9a, 9b) commun, en particulier un cylindre creux, un générateur à gaz (10) étant agencé de telle sorte qu'une augmentation de pression provoquée par un déclenchement du générateur à gaz (10) entraîne un déplacement des deux extrémités d'arceau (8) dans la position de retournement.

10. Système de protection contre les tonneaux selon une des revendications précédentes, **caractérisé en ce que** la tige d'accouplement (15) est formée de deux éléments de tige reliés entre eux de manière articulée.

11. Système de protection contre les tonneaux selon une des revendications précédentes, **caractérisé en ce qu'**un guidage (14), en particulier une coulisse, est configuré sur le support (2) pour le guidage de la seconde extrémité d'arceau (5) entre la position de rangement et la position de retournement.

12. Système de protection contre les tonneaux selon une des revendications précédentes, **caractérisé en ce qu'**un élément de déformation (6) est agencé dans la zone des montants d'arceau (4, 5) reliés entre eux de manière articulée.

13. Système de protection contre les tonneaux selon une des revendications précédentes, **caractérisé en ce que** l'élément de déformation (6) relie de manière articulée les montants d'arceau (4, 5) entre eux.

14. Système de protection contre les tonneaux selon une des revendications précédentes, **caractérisé en ce que** la seconde extrémité d'arceau (5) déplace en vue de la mise en place de l'arceau de sécurité (3) dans la position de retournement à partir d'une position de rangement proche de la première extrémité d'arceau (4) dans une position d'appui éloignée de la première extrémité d'arceau (4).
